# EUROPEAN PATENT SPECIFICATION

(11) **EP 4 249 524 B1**
(45) Date of publication and mention of the grant of the patent: **31.12.2025**
(21) Application number: 21894759.6
(22) Date of filing: 19.11.2021
(51) Int. Cl.: C09D 5/02, C08F 6/00, C08F 16/26, C08F 116/14, C09D 129/10, C08F 2/10

(54) **FLUOROPOLYMER AND METHOD FOR PRODUCING SAME**
FLUORPOLYMER UND VERFAHREN ZUR HERSTELLUNG DAVON
POLYMÈRE FLUORÉ, ET PROCÉDÉ DE FABRICATION DE CELUI-CI

(30) Priority: 19.11.2020 JP 2020192773
(43) Date of publication of application: 27.09.2023
(73) Proprietor: DAIKIN INDUSTRIES, LTD., Osaka-Shi, Osaka 530-0001 (JP)
(72) Inventor: HIGASHI, Masahiro, Osaka-shi, Osaka 530-0001 (JP); YAMATO, Kensuke, Osaka-shi, Osaka 530-0001 (JP); YONEDA, Satoru, Osaka-shi, Osaka 530-0001 (JP); ISHIHARA, Sumi, Osaka-shi, Osaka 530-0001 (JP); NAKANISHI, Kanako, Osaka-shi, Osaka 530-0001 (JP); KISHIKAWA, Yosuke, Osaka-shi, Osaka 530-0001 (JP)
(74) Representative: Hoffmann Eitle
(86) International application number: PCT/JP2021/042646
(87) International publication number: WO 2022/107888

(56) References cited:
- EP-A1- 1 686 425
- EP-A1- 3 885 406
- EP-A1- 3 960 775
- WO-A1-2005/050320
- WO-A1-2019/168183
- WO-A1-2020/105650
- WO-A1-2020/218619
- WO-A1-2020/218619
- JP-A- 2005 162 834
- JP-A- 2006 308 647
- JP-A- 2007 249 154
- JP-A- 2008 513 577
- JP-A- 2008 545 873
- JP-A- 2011 215 546
- JP-A- 2013 237 802
- JP-A- 2015 113 380
- JP-A- 2016 511 320
- JP-A- 2017 132 895
- JP-A- S50 116 579

## Description

### TECHNICAL FIELD

The present disclosure relates to a fluoropolymer and a production method therefor.

### BACKGROUND ART

As a coating composition particularly preferable for more effectively and efficiently obtaining an antireflection film to be provided on a resist film, Patent Document 1 discloses a coating composition containing:
(A1) a fluorine-containing polymer having a carboxyl group, and
(B) at least one solvent selected from the group consisting of water and alcohols, wherein
the fluorine-containing polymer (Al) has a number average molecular weight of from 10,000 to 750,000 and is represented by the formula (M-3):

   -(M3)-(N3)- (M-3)
wherein the structural unit M3 is a structural unit derived from a fluorine-containing monomer represented by the formula (5): 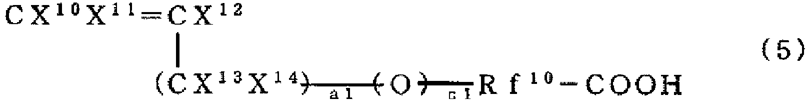
wherein X¹⁰ and X¹¹ are the same or different and each is H or F; X¹² is H, F, Cl, CH₃ or CF₃; X¹³ and X¹⁴ are the same or different and each is H or F; Rf¹⁰ is a divalent fluorine-containing alkylene group having 1 to 40 carbon atoms or a divalent fluorine-containing alkylene group having 2 to 100 carbon atoms and ether bond; a1 and c1 are the same or different and each is 0 or 1; the structural unit N3 is a structural unit derived from a monomer copolymerizable with the fluorine-containing monomer of the formula (5); and the structural units M3 and N3 are contained in amounts of from 55 to 100% by mole and from 0 to 45% by mole, respectively.
Patent Document 2 describes in Preparation Example 1 the preparation in aqueous solution using APS as the initiator of an homopolymer of CH₂=CF-CF₂-O-CF(CF₃) -CO₂H in nitrogen atmosphere at 60°C followed by ultrafiltration of the resulting aqueous solution. The polymer obtained after ultrafiltration has M_{w} = 180,000 and Mₙ = 140,000.Patent Document 3 describes in Synthesis Example 1 and Experimental Example 1 an homopolymer of CH₂=CF-CF₂-O-CF(CF₃)CO₂H with M_{w} = 320,000 and Mₙ = 100,000 that is prepared by solution polymerisation in water under nitrogen atmosphere at 60°C. The polymerisation is initiated with APS. The thus obtained polymer was purified by ultrafiltration to remove fractions of low molecular weight. The resulting polymer finds application in antireflection coating films.

### RELATED ART

### PATENT DOCUMENT

Patent Document 1: International Publication No. WO 2005/050320
Patent Document 2: WO 2020/105650
Patent Document 3: WO 2020/218619

### SUMMARY OF THE INVENTION

### PROBLEM TO BE SOLVED BY THE INVENTION

An object of the present disclosure is to provide a production method capable of producing a fluoropolymer having a high molecular weight even when a large amount of a polymerization unit derived from a monomer having a specific structure is introduced into the fluoropolymer.

Another object of the present disclosure is to provide a fluoropolymer capable of readily forming a uniform coating film having a desired film thickness despite containing a large amount of a polymerization unit derived from a monomer having a specific structure.

### MEANS FOR SOLVING THE PROBLEM

The present disclosure provides a method for producing a fluoropolymer, comprising polymerizing a monomer (I) represented by the general formula (I) in an aqueous medium to produce the fluoropolymer of the monomer (I), wherein an oxygen concentration in a reaction system of the polymerization is maintained at 500 ppm by volume or less and the monomer (I) is polymerized at a polymerization temperature of 20-59°C

General formula (I): CX₂=CY-CF₂-O-Rf-A

wherein X and Y are independently H, F, CH₃, or CF₃, and at least one of X and Y is F; Rf is a fluorine-containing alkylene group having 1 to 40 carbon atoms, or a fluorine-containing alkylene group having 2 to 100 carbon atoms and having an ether bond; and A is -COOM, -SO₃M, -OSO₃M, or - C(CF₃)₂OM, wherein M is H, a metal atom, NR⁷₄, imidazolium optionally having a substituent, pyridinium optionally having a substituent, or phosphonium optionally having a substituent, and R⁷ is H or an organic group.

In the production method of the present disclosure, preferably the monomer (I) is polymerized in the presence of a polymerization initiator, and the polymerization initiator is a persulfate.

In the production method of the present disclosure, preferably the monomer (I) is polymerized in the presence of a polymerization initiator, and the total amount of the polymerization initiator added for use in the polymerization is 0.00001 to 10% by mass based on the aqueous medium.

In the production method of the present disclosure, the amount of a monomer containing the monomer (I) present at the beginning of polymerization is preferably 40% by mass or more based on the amount of the aqueous medium present.

In the production method of the present disclosure, the content of the polymerization unit (I) derived from the monomer (I) in the fluoropolymer is preferably 50 mol% or more based on all polymerization units constituting the fluoropolymer.

In the production method of the present disclosure, the content of a polymerization unit (I) derived from the monomer (I) in the fluoropolymer is preferably 99 mol% or more based on all polymerization units constituting the fluoropolymer.

In the production method of the present disclosure, the fluoropolymer preferably has a weight average molecular weight (Mw) of 20.0 × 10⁴ or more, and more preferably 38.0 × 10⁴ or more.

In the production method of the present disclosure, the fluoropolymer preferably has a number average molecular weight (Mn) of 8.0 × 10⁴ or more.

In the production method of the present disclosure, an aqueous solution containing the fluoropolymer is preferably produced.

In the production method of the present disclosure, preferably a composition containing the aqueous medium and the fluoropolymer is recovered after polymerization is complete, and the composition is treated by at least one means selected from the group consisting of ultrafiltration, microfiltration, dialysis membrane treatment, liquid separation, and reprecipitation.

Also, the present disclosure provides a fluoropolymer of a monomer (I) represented by the general formula (I), wherein a content of a polymerization unit (I) derived from the monomer (I) is 50 mol% or more based on all polymerization units constituting the fluoropolymer, and the fluoropolymer has a weight average molecular weight (Mw) of 40 .0 × 10⁴ or more:

General formula (I): CX₂=CY-CF₂-O-Rf-A

wherein X and Y are independently H, F, CH₃, or CF₃, and at least one of X and Y is F; Rf is a fluorine-containing alkylene group having 1 to 40 carbon atoms, or a fluorine-containing alkylene group having 2 to 100 carbon atoms and having an ether bond; and A is -COOM, -SO₃M, -OSO₃M, or - C(CF₃)₂OM, wherein M is H, a metal atom, NR⁷₄, imidazolium optionally having a substituent, pyridinium optionally having a substituent, or phosphonium optionally having a substituent, and R⁷ is H or an organic group.

The fluoropolymer of the present disclosure preferably has a number average molecular weight (Mn) of 8.0 × 10⁴ or more.

In the fluoropolymer of the present disclosure, the content of the polymerization unit (I) is preferably 99 mol% or more based on all polymerization units constituting the fluoropolymer.

The fluoropolymer of the present disclosure is preferably substantially free of a dimer and a trimer of the monomer (I).

Also, the present disclosure provides an aqueous solution containing the fluoropolymer.

In the aqueous solution of the present disclosure, the content of the fluoropolymer is preferably 2% by mass or more based on the aqueous solution.

Also, the present disclosure provides a coating composition containing the fluoropolymer or the aqueous solution.

### EFFECTS OF INVENTION

The present disclosure can provide a production method capable of producing a fluoropolymer having a high molecular weight even when a large amount of a polymerization unit derived from a monomer having a specific structure is introduced into the fluoropolymer.

Also, the present disclosure can provide a fluoropolymer capable of readily forming a uniform coating film having a desired film thickness despite containing a large amount of a polymerization unit derived from a monomer having a specific structure.

### BRIEF DESCRIPTION OF EMBODIMENTS

Hereinafter, specific embodiments of the present disclosure will now be described in detail, but the present disclosure is not limited to the following embodiments.

Before specifically describing the present disclosure, some terms used herein are defined or explained.

The term "organic group" as used herein means a group containing one or more carbon atoms or a group formed by removing one hydrogen atom from an organic compound.

Examples of the "organic group" include:
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,

   RaO-,

   RaCO-,

   RaSO₂-,

   RaCOO-,

   RaNRaCO-,

   RaCONRa-,

   RaOCO-,

   RaOSO₂-,

   and

   RaNRbSO₂-,
wherein Ra is each independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and Rb is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8, and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms, and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, or a carbamoylamino group. Examples of the heterocyclic group include 5- or 6-membered heterocyclic groups having 2 to 12, and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, or a carbamoylamino group. Examples of the acyl group include acyl groups having 2 to 8, and preferably 2 to 4 carbon atoms in total, such as an acetyl group, a propanoyl group, a benzoyl group, and a 3-pyridinecarbonyl group.

The acylamino group may have an aliphatic group, an aromatic group, or a heterocyclic group, and may have, for example, an acetylamino group, a benzoylamino group, a 2-pyridinecarbonylamino group, or a propanoylamino group. Examples of the acylamino group include acylamino groups having 2 to 12 and preferably 2 to 8 carbon atoms in total, and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, or a carbamoylamino group. Examples of the aliphatic oxycarbonyl group include alkoxycarbonyl groups having 2 to 8, and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, or a heterocyclic group. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, or a carbamoylamino group. Examples of the aliphatic sulfonyl group include alkylsulfonyl groups having 1 to 6 carbon atoms in total, and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, or a carbamoylamino group, . Examples of the aromatic sulfonyl group include arylsulfonyl groups having 6 to 10 carbon atoms in total, such as a benzenesulfonyl group.

The amino group may have an aliphatic group, an aromatic group, or a heterocyclic group.

The acylamino group may have, for example, an acetylamino group, a benzoylamino group, a 2-pyridinecarbonylamino group, or a propanoylaminc group. Examples of the acylamino group include acylamino groups having 2 to 12 carbon atoms in total, preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, or a heterocyclic group. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, or a methoxyethoxy group. Examples of the aliphatic oxy group include alkoxy groups having 1 to 8, and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group each may have an aliphatic group, an aliphatic oxy group, a halogen atom, a carbamoyl group, a heterocyclic group ring-fused with the aryl group, and an aliphatic oxycarbonyl group, and preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 carbon atoms in total, and more preferably 1 to 6 carbon atoms in total, such as a methylthio group, an ethylthio group, a carbamoylmethylthio group, and a t-butylthio group.

The carbamoylamino group may have an aliphatic group, an aryl group, or a heterocyclic group. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range specified by the endpoints as used herein includes all numerical values within the range (for example, the range of 1 to 10 includes 1.4, 1.9, 2.33, 5.75, 9.98).

The phrase "at least one" as used herein includes all numerical values equal to or greater than 1 (such as at least 2, at least 4, at least 6, at least 8, at least 10, at least 25, at least 50, and at least 100).

Next, the production method of the present disclosure will now be specifically described.

The present disclosure provides a method for producing a fluoropolymer, comprising polymerizing a monomer (I) represented by the general formula (I) to produce a fluoropolymer of the monomer (I):

General formula (I): CX₂=CY-CF₂-O-Rf-A

wherein X and Y are independently H, F, CH₃, or CF₃, and at least one of X and Y is F; Rf is a fluorine-containing alkylene group having 1 to 40 carbon atoms, or a fluorine-containing alkylene group having 2 to 100 carbon atoms and having an ether bond; and A is -COOM, -SO₃M, -OSO₃M, or - C(CF₃)₂OM, wherein M is H, a metal atom, NR⁷₄, imidazolium optionally having a substituent, pyridinium optionally having a substituent, or phosphonium optionally having a substituent, and R⁷ is H or an organic group.

In the production method of the present disclosure, when the monomer (I) is polymerized, the oxygen concentration in the reaction system of the polymerization is maintained at 500 ppm by volume or less. By selecting such polymerization conditions, the molecular weight of the fluoropolymer of the monomer (I) can be increased.

In conventional production methods, introducing a polymerization unit (I) derived from a large amount of the monomer (I) into a fluoropolymer fails to produce a fluoropolymer having a high molecular weight. According to the production method of the present disclosure, the polymerization unit (I) can be introduced in an amount of 50 mol% or more based on all polymerization units constituting the fluoropolymer and, at the same time, the weight average molecular weight (Mw) of the fluoropolymer can be increased to 38.0 x 10⁴ or more.

The oxygen concentration in the reaction system of the polymerization is 500 ppm by volume or less. In the production method of the present disclosure, the oxygen concentration in the reaction system is maintained at 500 ppm by volume or less throughout the polymerization of the monomer (I). The oxygen concentration in the reaction system is preferably 350 ppm by volume or less, more preferably 300 ppm by volume or less, still more preferably 100 ppm by volume or less, and particularly preferably 50 ppm by volume or less. The oxygen concentration in the reaction system is usually 0.01 ppm by volume or more.

The oxygen concentration in the reaction system of the polymerization can be controlled by causing, for example, an inert gas such as nitrogen or argon, or the gaseous monomer when a gaseous monomer is used, to flow through a reaction solution or a gas phase around a reaction solution. The oxygen concentration in the reaction system of the polymerization can be determined by measuring and analyzing the gas emitted from the discharge gas line of the polymerization system with a low-concentration oxygen analyzer.

The polymerization temperature of the monomer (I) is 59°C or lower, more preferably 57°C or lower, still more preferably 55°C or lower, and particularly preferably 53°C or lower, and is 20°C or higher, preferably 25°C or higher, still more preferably 30°C or higher, and particularly preferably 35°C or higher because a fluoropolymer having a higher molecular weight can be readily produced.

In the production method of the present disclosure, polymerization may be carried out in the presence of a pH adjuster. The pH adjuster may be added before the initiation of polymerization or after the initiation of polymerization.

Examples of the pH adjuster include ammonia, sodium hydroxide, potassium hydroxide, sodium carbonate, potassium carbonate, ammonium carbonate, sodium hydrogen carbonate, potassium hydrogen carbonate, ammonium hydrogen carbonate, sodium phosphate, potassium phosphate, sodium citrate, potassium citrate, ammonium citrate, sodium gluconate, potassium gluconate, and ammonium gluconate. The pH can be measured with a pH meter manufactured by Orion.

The polymerization pressure is usually atmospheric pressure to 10 MPaG. The polymerization pressure is suitably determined in accordance with the types of the monomers used, the molecular weight of the target fluoropolymer, and the reaction rate.

The polymerization time is usually 1 to 200 hours, and may be 5 to 100 hours.

The aqueous medium is a reaction medium in which polymerization is performed, and means a liquid containing water. The aqueous medium may be any medium containing water, and it may be a medium containing water and, for example, any of fluorine-free organic solvents such as alcohols, ethers, and ketones, and/or fluorine-containing organic solvents having a boiling point of 40°C or lower. The aqueous medium is preferably water.

The monomer (I) is represented by the general formula (I):

General formula (I): CX₂=CY-CF₂-O-Rf-A

wherein X and Y are independently H, F, CH₃, or CF₃, and at least one of X and Y is F. X is preferably H or F, and more preferably H. Y is preferably H or F, and more preferably F.

Wherein Rf is a fluorine-containing alkylene group having 1 to 40 carbon atoms, or a fluorine-containing alkylene group having 2 to 100 carbon atoms and having an ether bond. The fluorine-containing alkylene group having 2 to 100 carbon atoms and having an ether bond is an alkylene group that does not include a structure wherein an oxygen atom is an end and that contains an ether bond between carbon atoms.

The fluorine-containing alkylene group preferably has 2 or more carbon atoms. Further, the fluorine-containing alkylene group preferably has 30 or less carbon atoms, more preferably 20 or less carbon atoms, still more preferably 10 or less carbon atoms, particularly preferably 6 or less carbon atoms, and most preferably 3 or less carbon atoms. Examples of the fluorine-containing alkylene group include -CF₂-, -CH₂CF₂-, -CF₂CF₂-, -CF₂CF₂CF₂-, -CF₂CH₂-, -CF₂CF₂CH₂-, -CF(CF₃)-, -CF(CF₃)CF₂-, and -CF(CF₃)CH₂-. The fluorine-containing alkylene group is preferably a perfluoroalkylene group.

The fluorine-containing alkylene group having an ether bond preferably has 3 or more carbon atoms. Further, the number of carbon atoms of the fluorine-containing alkylene group having an ether bond is preferably 60 or less, more preferably 30 or less, still more preferably 12 or less, particularly preferably 9 or less, and most preferably 6 or less. The fluorine-containing alkylene group having an ether bond is also preferably a divalent group represented by the general formula: 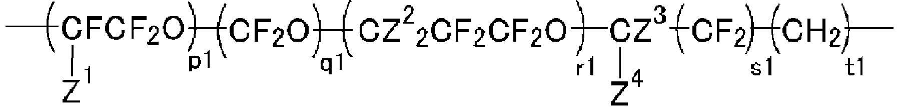 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF(CF₃)CF₂-O-CF(CF₃)-, - (CF(CF₃)CF₂-O)ₙ-CF(CF₃)- (wherein n is an integer of 1 to 10), -CF(CF₃)CF₂-O-CF(CF₃)CH₂-, - (CF(CF₃)CF₂-O)ₙ-CF(CF₃)CH₂- (wherein n is an integer of 1 to 10), - CH₂CF₂CF₂O-CH₂CF₂CH₂-, -CF₂CF₂CF₂O-CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.
wherein, A is -COOM, -SO₃M, -OSO₃M, or -C (CF₃)₂OM. A is preferably -COOM or -SO₃M, and more preferably -COOM.

M is H, a metal atom, NR⁷₄, imidazolium optionally having a substituent, pyridinium optionally having a substituent, or phosphonium optionally having a substituent, wherein R⁷ is H or an organic group.

Examples of the metal atom include alkali metals (Group 1) and alkaline earth metals (Group 2), and preferable is Na, K, or Li.

M is preferably H, a metal atom, or NR⁷₄, more preferably H, an alkali metal (Group 1), an alkaline earth metal (Group 2), or NR⁷₄, still more preferably H, Na, K, Li, or NH₄, further preferably H, Na, K, or NH₄, particularly preferably H, Na, or NH₄, and most preferably H or NH₄. R⁷ is preferably H or a C₁₋₁₀ organic group, more preferably H or a C₁₋₄ organic group, and still more preferably H or a C₁₋₄ alkyl group.

The monomer (I) is preferably a monomer represented by the general formula (1A).

The polymerization unit (I) is preferably a polymerization unit (1A) derived from a monomer represented by the general formula (1A):

CH₂=CF (-CF₂-O-Rf-A) (1A)

wherein Rf and A are as described above.

In the production method of the present disclosure, the monomer represented by the general formula (1A) may be copolymerized with a further monomer.

The fluoropolymer may be a homopolymer of the monomer represented by the general formula (1A), or may be a copolymer with a further monomer.

Specific examples of the monomer represented by the formula (1A) include monomers represented by the general formula: 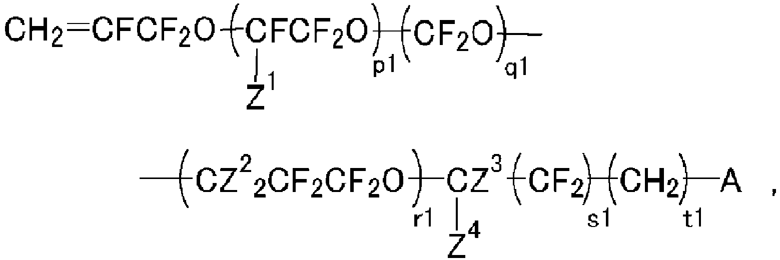 wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5, provided that when Z³ and Z⁴ are both H, p1+q1+r1+s1 is not 0; and A is as defined above. More specific examples preferably include:

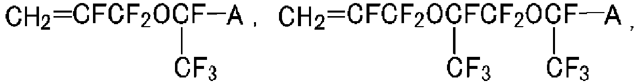

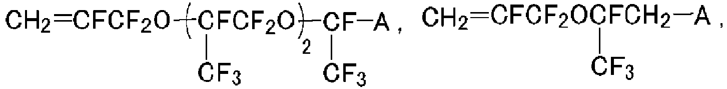

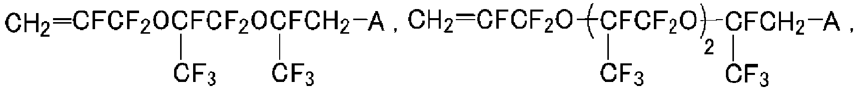

CH₂=CFCF₂OCH₂CF₂-A, CH₂=CFCF₂O(CH₂CF₂CF₂O)CH₂CF₂-A,

CH₂=CFCF₂OCH₂CF₂CH₂-A,

CH₂=CFCF₂O(CH₂CF₂CF₂O)CH₂CF₂CH₂-A,

CH₂=CFCF₂OCF₂CF₂-A, CH₂=CFCF₂O(CF₂CF₂CF₂O)CF₂CF₂-A,

CH₂=CFCF₂OCF₂CF₂CH₂-A,

CH₂=CFCF₂O(CF₂CF₂CF₂O)CF₂CF₂CH₂-A,

CH₂=CFCF₂OCF₂-A, CH₂=CFCF₂O(CF₂CF₂O)CF₂-A,

CH₂=CFCF₂OCF₂CH₂-A,

CH₂=CFCF₂O(CF₂CF₂O)CF₂CH₂-A,

and, in particular, 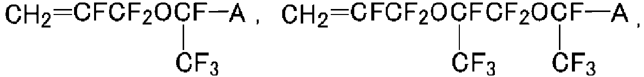 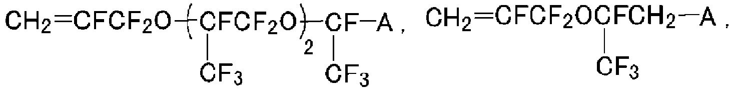 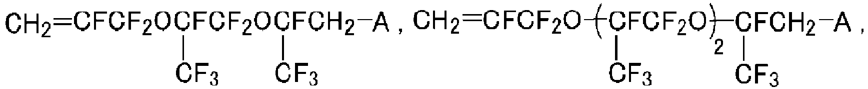 are preferable.

In the monomer represented by the general formula (1A), A in the formula (1A) is preferably -COOM. Specifically, the monomer represented by the general formula (1A) is preferably at least one selected from the group consisting of CH₂=CFCF₂OCF(CF₃)COOM and CH₂=CFCF₂OCF (CF₃)CF₂OCF(CF₃)COOM (wherein M is as defined above), and more preferably CH₂=CFCF₂OCF(CF₃)COOM.

Examples of the monomer represented by the general formula (I) further include monomers represented by the following formula:

CF₂=CFCF₂-O-Rf-A

wherein Rf and A are as described above.

More specific examples include:

CF₂=CFCF₂OCF₂CF₂CF₂-A,

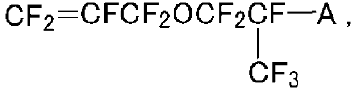

CF₂=CFCF₂OCF₂CF₂CF₂CH₂-A,

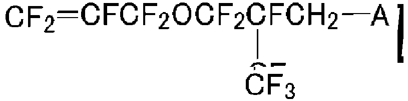

In the production method of the present disclosure, the monomer (I) may be copolymerized with a further monomer. The fluoropolymer may be a homopolymer of the monomer represented by the general formula (I), or may be a copolymer with a further monomer.

The further monomer is preferably a monomer represented by the general formula CFR=CR₂ wherein R is independently H, F, or a perfluoroalkyl group having 1 to 4 carbon atoms. Also, the further monomer is preferably a fluorine-containing ethylenic monomer having 2 or 3 carbon atoms. Examples of the further monomer include CF₂=CF₂, CF₂=CFCl, CH₂=CF₂, CFH=CH₂, CFH=CF₂, CF₂=CFCF₃, CH₂=CFCF₃, CH₂=CHCF₃, CHF=CHCF₃ (E-form), and CHF=CHCF₃ (Z-form).

Among these, from the viewpoint of good copolymerizability, the further monomer is preferably at least one selected from the group consisting of tetrafluoroethylene (CF₂=CF₂), chlorotrifluoroethylene (CF₂=CFCl), and vinylidene fluoride (CH₂=CF₂), and more preferably at least one selected from the group consisting of tetrafluoroethylene and vinylidene fluoride. Accordingly, the polymerization unit derived from the further monomer is preferably a polymerization unit derived from tetrafluoroethylene. The polymerization unit derived from the further monomer may be the same or different at each occurrence, and the fluoropolymer may contain a polymerization unit derived from two or more different further monomers.

Examples of the further monomer include monomers represented by the general formula (n1-2): 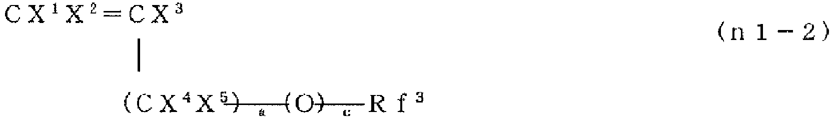 wherein X¹ and X² are the same or different and H or F; X³ is H, F, Cl, CH₃, or CF₃; X⁴ and X⁵ are the same or different and H or F; a and c are the same or different and 0 or 1; and Rf³ is a fluorine-containing alkyl group having 1 to 40 carbon atoms or a fluorine-containing alkyl group having 2 to 100 carbon atoms and having an ether bond.

Specifically, preferable examples include CH₂=CFCF₂-O-Rf³, CF₂=CF-O-Rf³, CF₂=CFCF₂-O-Rf³, CF₂=CF-Rf³, CH₂=CH-Rf³, and CH₂=CH-O-Rf³ (wherein Rf³ is as in the above formula (n1-2)).

Examples of the further monomer also include fluorine-containing acrylate monomers represented by the formula (n2-1): 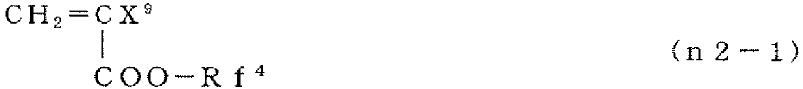 wherein X⁹ is H, F, or CH₃; and Rf⁴ is a fluorine-containing alkyl group having 1 to 40 carbon atoms or a fluorine-containing alkyl group having 2 to 100 carbon atoms and having an ether bond. Examples of the Rf⁴ group include: 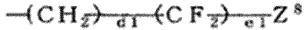 wherein Z⁸ is H, F, or Cl; d1 is an integer of 1 to 4; and e1 is an integer of 1 to 10,

-CH(CF₃)₂.

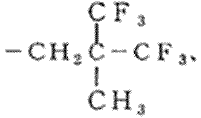

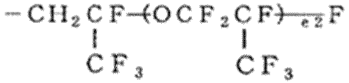

wherein e2 is an integer of 1 to 5, 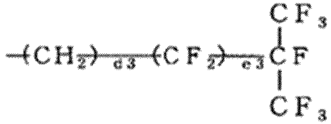 wherein d3 is an integer of 1 to 4; and e3 is an integer of 1 to 10.

Examples of the further monomer also include fluorine-containing vinyl ether represented by the formula (n2-2):

CH₂=CHO-Rf⁵ (n2-2)

wherein Rf⁵ is a fluorine-containing alkyl group having 1 to 40 carbon atoms or a fluorine-containing alkyl group having 2 to 100 carbon atoms and having an ether bond.

Specifically, preferable examples of the monomer represented by the general formula (n2-2) include: 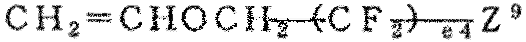 wherein Z⁹ is H or F; and e4 is an integer of 1 to 10, 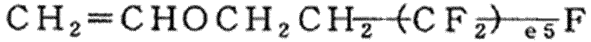 wherein e5 is an integer of 1 to 10, 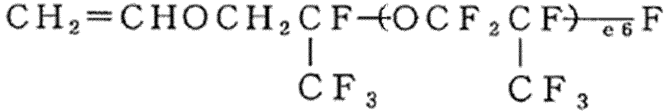 wherein e6 is an integer of 1 to 10.

More specific examples include:

CH₂=CHOCH₂CF₂CF₂H,

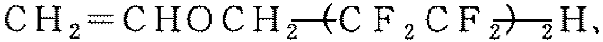

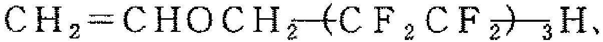

CH₂=CHOCH₂CF₂CF₃,

CH₂=CHOCH₂CF₃,

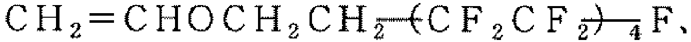

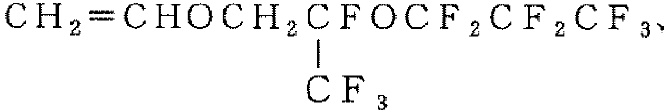

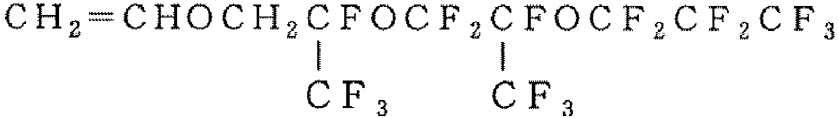

In addition, examples also include fluorine-containing allyl ether represented by the general formula (n2-3):

CH₂=CHCH₂O-Rf⁶ (n2-3)

wherein Rf⁶ is a fluorine-containing alkyl group having 1 to 40 carbon atoms or a fluorine-containing alkyl group having 2 to 100 carbon atoms and having an ether bond; and fluorine-containing vinyl monomers represented by the general formula (n2-4):

CH₂=CH-Rf⁷ (n2-4)

wherein Rf⁷ is a fluorine-containing alkyl group having 1 to 40 carbon atoms or a fluorine-containing alkyl group having 2 to 100 carbon atoms and having an ether bond.

Specific examples of monomers represented by the general formulae (n2-3) and (n2-4) include monomers such as:

CH₂=CHCH₂OCH₂CF₂CF₂H,

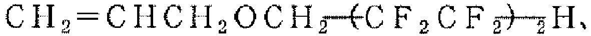

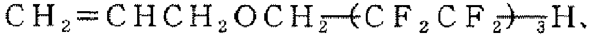

CH₂=CHCH₂OCH₂CF₂CF₃,

CH₂=CHCH₂OCH₂CF₃,

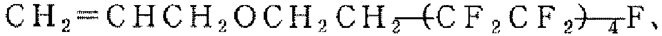

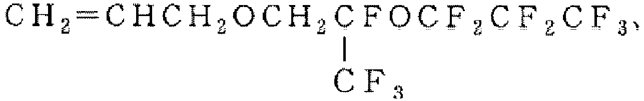

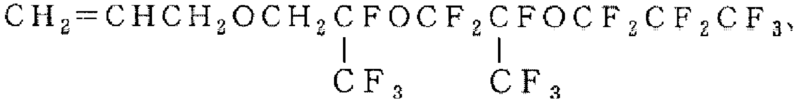

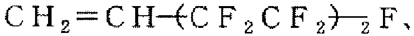

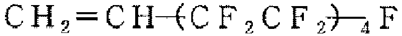

In the production method of the present disclosure, the monomer (I) can be polymerized in the presence of a polymerization initiator. The polymerization initiator may be any polymerization initiator capable of generating radicals within the polymerization temperature range, and known oil-soluble and/or water-soluble polymerization initiators may be used. The polymerization initiator can be combined with a reducing agent or the like to form a redox agent and initiate the polymerization. The concentration of the polymerization initiator is suitably determined according to the type of monomer, the molecular weight of the target fluoropolymer, and the reaction rate.

As a polymerization initiator, persulfates (such as ammonium persulfate) and organic peroxide such as disuccinic acid peroxide or diglutaric acid peroxide can be used alone or in the form of a mixture thereof. Further, the polymerization initiator may be used together with a reducing agent such as sodium sulfite so as to form a redox system. Moreover, the concentration of radicals in the system can be also regulated by adding a radical scavenger such as hydroquinone or catechol or adding a peroxide decomposer such as ammonium sulfate during polymerization.

As a polymerization initiator, persulfate is particularly preferable because a fluoropolymer having a higher molecular weight can be readily produced. Examples of persulfate include ammonium persulfate, potassium persulfate, and sodium persulfate, and ammonium persulfate is preferable.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

In the production method of the present disclosure, the polymerization initiator can be added at the initiation of polymerization, and can be added also during polymerization. When the polymerization initiator is also added during polymerization, the proportion of the amount of the polymerization initiator added at the initiation of polymerization to the amount of the polymerization initiator added during polymerization is preferably 95/5 to 5/95, more preferably 60/40 to 10/90, and more preferably 30/70 to 15/85. The method for adding the polymerization initiator during polymerization is not limited, and the entire amount may be added at once, may be added in two or more divided portions, or may be added continuously.

In the production method of the present disclosure, the total amount of the polymerization initiator added to be used in the polymerization is preferably 0.00001 to 10% by mass based on the aqueous medium because a fluoropolymer having a higher molecular weight can be readily produced. The total amount of the polymerization initiator added to be used in the polymerization is preferably 0.0001% by mass or more, more preferably 0.001% by mass or more, and still more preferably 0.01% by mass or more, and is preferably 5% by mass or less, and more preferably 2% by mass or less.

In the production method of the present disclosure, because a fluoropolymer having a higher molecular weight can be readily produced, the amount of a monomer containing the monomer (I) present at the beginning of polymerization is preferably 30% by mass or more based on the amount of the aqueous medium present. The amount of the monomer present is more preferably 35% by mass or more, and still more preferably 40% by mass or more. The upper limit of the amount of the monomer present is not limited, and may be 70% by mass or less or may be 60% by mass or less from the viewpoint of causing polymerization to proceed smoothly. The amount of the monomer present at the beginning of polymerization is the total amount of the monomer (I) and, if any, other monomers present in the reactor at the beginning of polymerization.

Polymerization of the monomer (I) can be performed by charging a polymerization reactor with an aqueous medium, the monomer (I), optionally a further monomer, and optionally a further additive, stirring the contents of the reactor, maintaining the reactor at a predetermined polymerization temperature, and adding a predetermined amount of a polymerization initiator to thereby initiate the polymerization reaction. After the initiation of the polymerization reaction, the monomer, the polymerization initiator, and the further additive may be added depending on the purpose.

Polymerization of the monomer (I) can be carried out substantially in the absence of a fluorine-containing surfactant. The expression "substantially in the absence of a fluorine-containing surfactant" as used herein means that the amount of the fluorine-containing surfactant is 10 ppm by mass or less based on the aqueous medium. The amount of the fluorine-containing surfactant is preferably 1 ppm by mass or less, more preferably 100 mass ppb or less, still more preferably 10 mass ppb or less, and further preferably 1 mass ppb or less based on the aqueous medium.

Examples of the fluorine-containing surfactant include an anionic fluorine-containing surfactant. The anionic fluorine-containing surfactant may be, for example, a fluorine atom-containing surfactant having 20 or less carbon atoms in total in the portion excluding the anionic group.

The fluorine-containing surfactant may also be a fluorine-containing surfactant having an anionic moiety having a molecular weight of 800 or less.

The "anionic moiety" means the portion of the fluorine-containing surfactant excluding the cation. For example, in the case of F(CF₂)ₙ₁COOM represented by formula (I) described below, the anionic moiety is the "F(CF₂)ₙ₁COO" moiety.

Examples of the fluorine-containing surfactant include fluorine-containing surfactants having a Log POW of 3.5 or less. The Log POW is a partition coefficient between 1-octanol and water, which is represented by Log P (wherein P is the ratio between the concentration of the fluorine-containing surfactant in octanol and concentration of the fluorine-containing surfactant in water in a phase-separated octanol/water (1:1) liquid mixture containing the fluorine-containing surfactant).

Log POW is determined as follows. Specifically, HPLC is performed on standard substances (heptanoic acid, octanoic acid, nonanoic acid, and decanoic acid) each having a known octanol/water partition coefficient using TOSOH ODS-120T (φ4.6 mm × 250 mm, manufactured by Tosoh Corp.) as a column and acetonitrile/0.6% by mass HClO₄ aqueous solution (= 1/1 (vol/vol%)) as an eluent at a flow rate of 1.0 ml/min, a sample amount of 300 µL, and a column temperature of 40°C, with a detection light of UV210 nm. For each standard substance, a calibration curve is drawn with respect to the elution time and the known octanol/water partition coefficient. Based on the calibration curve, Log POW is calculated from the elution time of the sample liquid in HPLC.

Specific examples of the fluorine-containing surfactant include those disclosed in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include compounds represented by the following general formula (N⁰):

Xⁿ⁰-Rfⁿ⁰-Y⁰ (N⁰)

wherein Xⁿ⁰ is H, Cl, or F; Rfⁿ⁰ is linear, branched, or cyclic alkylene group having 3 to 20 carbon atoms, in which some or all of Hs are replaced with F, the alkylene group may contain one or more ether bonds, and some Hs may be replaced with Cl; and Y⁰ is an anionic group.

The anionic group Y⁰ may be -COOM, -SO₂M, or -SO₃M, and may be -COOM or -SO₃M.

M is H, a metal atom, NR⁷₄, imidazolium optionally having a substituent, pyridinium optionally having a substituent, or phosphonium optionally having a substituent, and R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

Rfⁿ⁰ may be one in which 50% or more of H is replaced with fluorine.

Examples of the compound represented by the general formula (N⁰) include:
a compound represented by the following general formula (N¹):

Xⁿ⁰- (CF₂)ₘ₁-Y⁰ (N¹)

wherein Xⁿ⁰ is H, Cl, or F, m1 is an integer of 3 to 15, and Y⁰ is as defined above; a compound represented by the following general formula (N²):

Rfⁿ¹-O- (CF(CF₃)CF₂O)ₘ₂CFXⁿ¹-Y⁰ (N²)

wherein Rfⁿ¹ is a perfluoroalkyl group having 1 to 5 carbon atoms, m2 is an integer of 0 to 3, Xⁿ¹ is F or CF₃, and Y⁰ is as defined above; a compound represented by the following general formula (N³):

Rfⁿ²(CH₂)ₘ₃- (Rfⁿ³)_{q}-Y⁰ (N³)

wherein Rfⁿ² is a partially or fully fluorinated alkyl group having 1 to 13 carbon atoms and optionally containing an ether bond, m3 is an integer of 1 to 3, Rfⁿ³ is a linear or branched perfluoroalkylene group having 1 to 3 carbon atoms, q is 0 or 1, and Y⁰ is as defined above; a compound represented by the following general formula (N⁴):

Rfⁿ⁴-O-(CYⁿ¹Yⁿ²)ₚCF₂-Y⁰ (N⁴)

wherein Rfⁿ⁴ is a linear or branched partially or fully fluorinated alkyl group having 1 to 12 carbon atoms and optionally containing an ether bond and/or a chlorine atom, Yⁿ¹ and Yⁿ² are the same or different and are each H or F, p is 0 or 1, and Y⁰ is as defined above; and a compound represented by the following general formula (N⁵): 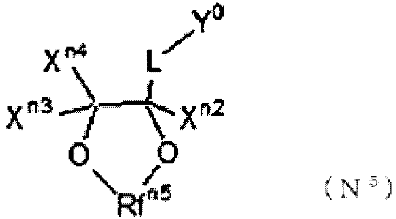 wherein Xⁿ², Xⁿ³, and Xⁿ⁴ may be the same or different and are each H, F, or a linear or branched, partially or fully fluorinated alkyl group having 1 to 6 carbon atoms and optionally containing an ether bond, Rfⁿ⁵ is a linear or branched, partially or fully fluorinated alkylene group having 1 to 3 carbon atoms and optionally containing an ether bond, L is a linking group, and Y⁰ is as defined above, provided that the total number of carbon atoms of Xⁿ², Xⁿ³, Xⁿ⁴, and Rfⁿ⁵ is 18 or less.

Examples of the compound represented by the general formula (N⁰) include perfluorocarboxylic acid (I) represented by the following general formula (I), ω-H perfluorocarboxylic acid (II) represented by the following general formula (II), perfluoroether carboxylic acid (III) represented by the following general formula (III), perfluoroalkylalkylenecarboxylic acid (IV) represented by the following general formula (IV), perfluoroalkoxyfluorocarboxylic acid (V) represented by the following general formula (V), perfluoroalkylsulfonic acid (VI) represented by the following general formula (VI), ω-H perfluorosulfonic acid (VII) represented by the following general formula (VII), perfluoroalkylalkylene sulfonic acid (VIII) represented by the following general formula (VIII), alkylalkylenecarboxylic acid (IX) represented by the following general formula (IX), fluorocarboxylic acid (X) represented by the following general formula (X), alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

F(CF₂)ₙ₁COOM (I)

wherein n1 is an integer of 3 to 14, M is H, a metal atom, NR⁷₄, imidazolium optionally having a substituent, pyridinium optionally having a substituent, or phosphonium optionally having a substituent, and R⁷ is H or an organic group.

The ω-H perfluorocarboxylic acid (II) is represented by the following general formula (II):

H(CF₂)ₙ₂COOM (II)

wherein n2 is an integer of 4 to 15, and M is as defined above.

The perfluoroethercarboxylic acid (III) is represented by the following general formula (III):

Rf¹-O-(CF(CF₃)CF₂O)ₙ₃CF(CF₃)COOM (III)

wherein Rf¹ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

Rf² (CH₂)ₙ₄Rf³COOM (IV)

wherein Rf² is a perfluoroalkyl group having 1 to 5 carbon atoms, Rf³ is a linear or branched perfluoroalkylene group having 1 to 3 carbon atoms, n4 is an integer of 1 to 3, and M is as defined above.

The alkoxyfluorocarboxylic acid (V) is represented by the following general formula (V):

Rf⁴-O-CY¹Y²CF₂-COOM (V)

wherein Rf⁴ is a linear or branched, partially or fully fluorinated alkyl group having 1 to 12 carbon atoms and optionally containing an ether bond and/or a chlorine atom, Y¹ and Y² are the same or different and are H or F, and M is as defined above.

The perfluoroalkylsulfonic acid (VI) is represented by the following general formula (VI):

F(CF₂)ₙ₅SO₃M (VI)

wherein n5 is an integer of 3 to 14, and M is as defined above.

The ω-H perfluorosulfonic acid (VII) is represented by the following general formula (VII):

H(CF₂)ₙ₆SO₃M (VII)

wherein n6 is an integer of 4 to 14, and M is as defined above.

The perfluoroalkylalkylenesulfonic acid (VIII) is represented by the following general formula (VIII):

Rf⁵(CH₂)ₙ₇SO₃M (VIII)

wherein Rf⁵ is a perfluoroalkyl group having 1 to 13 carbon atoms, n7 is an integer of 1 to 3, and M is as defined above.

The alkylalkylenecarboxylic acid (IX) is represented by the following general formula (IX):

Rf⁶(CH₂)ₙ₈COOM (IX)

wherein Rf⁶ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

Rf⁷-O-Rf⁸-O-CF₂-COOM (X)

wherein Rf⁷ is a linear or branched partially or fully fluorinated alkyl group having 1 to 6 carbon atoms and optionally containing an ether bond and/or a chlorine atom, Rf⁸ is a linear or branched partially or fully fluorinated alkyl group having 1 to 6 carbon atoms, and M is as defined above.

The alkoxyfluorosulfonic acid (XI) is represented by the following general formula (XI):

Rf⁹-O-CY¹Y²CF₂-SO₃M (XI)

wherein Rf⁹ is a linear or branched, partially or fully fluorinated alkyl group having 1 to 12 carbon atoms, optionally containing an ether bond, and optionally containing chlorine, Y¹ and Y² are the same or different and are H or F, and M is as defined above.

The compound (XII) is represented by the following general formula (XII): 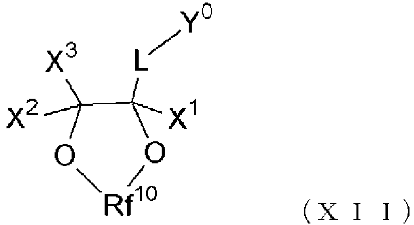 wherein X¹, X², and X³ may be the same or different and are H, F, or a linear or branched partially or fully fluorinated alkyl group having 1 to 6 carbon atoms and optionally containing an ether bond, Rf¹⁰ is a perfluoroalkylene group having 1 to 3 carbon atoms, L is a linking group, and Y⁰ is an anionic group.

Y⁰ may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

Rf¹¹-O-(CF₂CF(CF₃)O)ₙ₉(CF₂O)ₙ₁₀CF₂COOM (XIII)

wherein Rf¹¹ is a fluoroalkyl group having 1 to 5 carbon atoms containing chlorine, n9 is an integer of 0 to 3, n10 is an integer of 0 to 3, and M is as defined above. Examples of the compound (XIII) include CF₂ClO(CF₂CF(CF₃)O)ₙ₉ (CF₂O)ₙ₁₀CF₂COONH₄ (a mixture having an average molecular weight of 750, n9 and n10 in the formula are defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

Examples of the fluorine-containing surfactant include compounds represented by the following formulae. The fluorine-containing surfactant may be a mixture of these compounds. In one embodiment of the polymerization, the monomer (I) is polymerized substantially in the absence of compounds represented by the following formulae:

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF (CF₃)OCF (CF₃)CF₂OCF₂COOM, and

CF₂ClCF (CF₃)OCF₂CF (CF₃)OCF₂COOM,

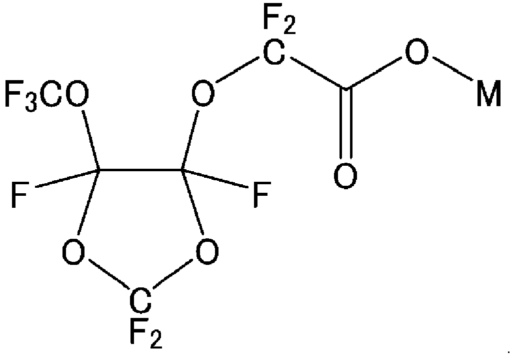

wherein M is H, a metal atom, NR⁷₄, imidazolium optionally having a substituent, pyridinium optionally having a substituent, or phosphonium optionally having a substituent, and R⁷ is H or an organic group.

In the production method of the present disclosure, the monomer (I) is polymerized in an aqueous medium, and thus an aqueous solution containing a fluoropolymer and the aqueous medium is usually obtained. The resulting fluoropolymer-containing aqueous solution may be used as-is in various applications, and the fluoropolymer separated from the aqueous solution may be used in various applications. The method for separating the fluoropolymer from the aqueous solution is not limited. For example, the fluoropolymer can be separated by a method such as coagulation, washing, or drying of the fluoropolymer in the aqueous solution.

The fluoropolymer or the aqueous solution obtained by polymerizing the monomer (I) includes a fraction having a molecular weight of 3,000 or less, a dimer and a trimer of the monomer (I), and the like. In order to remove these, the fluoropolymer or the aqueous solution obtained by polymerizing the monomer (I) may be post-treated.

For example, in the production method of the present disclosure, a composition containing the aqueous medium and the fluoropolymer may be recovered after the polymerization of the monomer (I) is complete, and the resulting composition may be treated by at least one means selected from the group consisting of ultrafiltration, microfiltration, dialysis membrane treatment, liquid separation, and reprecipitation.

The composition obtained by polymerizing the monomer (I) usually contains, as the fluoropolymer of the monomer (I), a dimer and a trimer in a total amount of more than 1.0% by mass based on the mass of the fluoropolymer of the monomer (I). The content of the dimer and the trimer in the fluoropolymer of the monomer (I), for example, may be 2.0% by mass or more, may be 3.0% by mass or more, may be 30.0% by mass or less, and may be 20.0% by mass or less based on the fluoropolymer of the monomer (I). The content of the dimer and the trimer in the composition can be determined by performing a gel permeation chromatography (GPC) analysis on the composition and calculating the total proportion of the peak areas (area percentages) of the dimer and the trimer to the total area of all peaks of the chromatogram obtained by the GPC analysis.

Next, preferably the resulting composition containing the aqueous medium and the fluoropolymer is recovered, and the resulting composition is treated by at least one means selected from the group consisting of ultrafiltration, microfiltration, dialysis membrane treatment, liquid separation, and reprecipitation. By this treatment, the dimer and the trimer of the monomer (I) contained in the composition obtained by the polymerization of the monomer (I) can be removed from the composition. The means of treatment is more preferably at least one means selected from the group consisting of ultrafiltration, microfiltration, liquid separation, and reprecipitation, still more preferably at least one means selected from the group consisting of ultrafiltration and liquid separation, and particularly preferably ultrafiltration.

The polymerization of the monomer (I) produces a dimer and a trimer of the monomer (I) and, as a result, the dimer and the trimer of the monomer (I) are contained in the fluoropolymer. The mechanism by which the dimer and the trimer of the monomer (I) are produced is not necessarily clear, but it is conjectured that by the polymerization reaction in the polymerization system composed mostly of the monomer (I) among the monomers present in the polymerization system in particular, dimerization and trimerization of the monomer (I) occur with non-negligible frequency.

When removing the dimer and the trimer, usually the unreacted monomer (I) is also removed from the composition at the same time. Also, a fraction having a molecular weight of 3,000 or less can be removed by suitably selecting the means of post-treatment.

The composition obtained by the polymerization of the monomer (I) may be a composition as polymerized that is obtained from polymerization, may be what is obtained by diluting or concentrating a composition as polymerized that is obtained from polymerization, or may be what is obtained by dispersion stabilization treatment. In order to facilitate ultrafiltration, microfiltration, or dialysis membrane treatment, it is also preferable to regulate the viscosity of the composition by these treatments.

The content of the fluoropolymer of the monomer (I) in the composition is not limited, and may be, for example, 0.1 to 20% by mass. The content of the fluoropolymer in the composition is, from the viewpoint of the removal efficiency of the dimer and the trimer, preferably 18.0% by mass or less, more preferably 15.0% by mass or less, still more preferably 12.0% by mass or less, particularly preferably 10.0% by mass or less, preferably 0.5% by mass or more, more preferably 1.0% by mass or more, still more preferably 1.2% by mass or more, and particularly preferably 1.5% by mass or more. The content of the fluoropolymer in the composition can be regulated by, for example, a method involving adding water to the composition obtained by the polymerization of the monomer (I), or a method involving concentrating the composition obtained by the polymerization of the monomer (I).

The pH of the composition is preferably 0 to 11, more preferably 0.5 to 8.0, and still more preferably 1.0 to 7.0. The pH of the composition can be regulated by adding a pH adjuster to the composition obtained by the polymerization of the monomer (I). The pH adjuster may be an acid or an alkali, such as a phosphoric acid salt, sodium hydroxide, potassium hydroxide, or aqueous ammonia.

The viscosity of the composition is preferably 25 mPa·s or less because ultrafiltration, microfiltration, or dialysis membrane treatment is facilitated. The viscosity of the composition can be regulated by, for example, a method involving adjusting the weight average molecular weight and the number average molecular weight of the fluoropolymer, a method involving adjusting the fluoropolymer concentration of the composition, or a method involving adjusting the temperature of the composition.

Ultrafiltration or microfiltration is not limited no matter whether it is cross-flow filtration or dead-end filtration, and cross-flow filtration is preferable from the viewpoint of reducing the clogging of a membrane.

Ultrafiltration can be performed using an ultrafiltration membrane. Ultrafiltration can be performed using, for example, an ultrafiltration apparatus having an ultrafiltration membrane; and a centrifugal ultrafiltration method, a batch-type ultrafiltration method, a circulation-type ultrafiltration method, and the like can be employed.

The molecular weight cut-off of the ultrafiltration membrane is usually about 0.1 × 10⁴ to 30 × 10⁴ Da. The molecular weight cut-off of the ultrafiltration membrane is preferably 1.5 × 10⁴ Da or more because the clogging of the membrane can be suppressed and the dimer and the trimer can be efficiently reduced. The molecular weight cut-off is more preferably 2.0 × 10⁴ Da or more, particularly preferably 3.0 × 10⁴ Da or more, and most preferably 5.0 × 10⁴ Da or more. The molecular weight cut-off may be 8.0 × 10⁴ Da or more. Further, from the viewpoint of the removal efficiency of the dimer and the trimer, the molecular weight cut-off is preferably 20 × 10⁴ Da or less, and more preferably 10 × 10⁴ Da or less.

The molecular weight cut-off of the ultrafiltration membrane can be, for example, a molecular weight at which, 90% of polystyrene having a known weight average molecular weight that is attempted to pass through the membrane is blocked. The quantification of polystyrene can be performed using gel permeation chromatography.

The ultrafiltration membrane is not limited and may be in a conventionally known form, and examples include a hollow fiber type, a flat membrane type, a spiral type, and a tubular type. From the viewpoint of suppressing clogging, a hollow fiber type is preferable.

The inner diameter of the hollow fiber type ultrafiltration membrane is not limited, and may be, for example, 0.1 to 2 mm, and is preferably 0.8 to 1.4 mm.

The length of the hollow fiber type ultrafiltration membrane is not limited, and may be, for example, 0.05 to 3 m, and is preferably 0.05 to 2 m.

The material of the ultrafiltration membrane is not limited, and examples include organic materials such as cellulose, cellulose ester, polysulfone, sulfonated polysulfone, polyethersulfone, sulfonated polyether sulfone, chlorinated polyethylene, polypropylene, polyolefin, polyvinyl alcohol, polymethylmethacrylate, polyacrylonitrile, polyvinylidene fluoride, and polytetrafluoroethylene, metals such as stainless steel, and inorganic materials such as ceramics.

The material of the ultrafiltration membrane is preferably an organic material, more preferably chlorinated polyethylene, polypropylene, polyvinylidene fluoride, polytetrafluoroethylene, polyacrylonitrile, polysulfone, or polyethersulfone, and still more preferably polyacrylonitrile or polyvinylidene fluoride.

Specific examples of the ultrafiltration membrane include G-5 type, G-10 type, G-20 type, G-50 type, PW type, and HWS UF type of DESAL; HFM-180, HFM-183, HFM-251, HFM-300, HFM-116, HFM-183, HFM-300, HFK-131, HFK-328, MPT-U20, MPS-U20P, and MPS-U20S of KOCH; SPE1, SPE3, SPE5, SPE10, SPE30, SPV5, SPV50, and SOW30 of Synder; Microza(R) UF series manufactured by Asahi Kasei Corporation; and NTR 7410 manufactured by Nitto Denko Corporation.

From the viewpoint of the removal efficiency of the dimer and the trimer, the ultrafiltration is preferably performed at a pressure of 0.01 MPa or more. More preferably, the pressure is 0.03 MPa or more, and still more preferably 0.05 MPa or more. Further, from the viewpoint of pressure resistance, the pressure is preferably 0.5 MPa or less, more preferably 0.25 MPa or less, and still more preferably 0.2 MPa or less.

From the viewpoint of the removal efficiency of the dimer and the trimer, the ultrafiltration is preferably performed at a flow rate of 10 mL/min or more and more preferably performed at a flow rate of 50 mL/min or more, and is preferably performed at a flow rate of 5,000 mL/min or less and more preferably performed at a flow rate of 1,000 mL/min or less.

Microfiltration can be performed using a microfiltration membrane. The microfiltration membrane usually has an average pore size of 0.05 to 1.0 µm.

The microfiltration membrane preferably has an average pore size of 0.1 µm or more because the dimer and the trimer can be efficiently removed. The average pore size is more preferably 0.075 µm or more, and even still more preferably 0.1 µm or more. Further, the average pore size is preferably 1.00 µm or less. The average pore size is more preferably 0.50 µm or less, and still more preferably 0.25 µm or less.

The average pore size of the microfiltration membrane can be measured in accordance with ASTM F 316-03 (a bubble point method).

The microfiltration membrane is not limited and may be in a conventionally known form, and examples include a hollow fiber type, a flat membrane type, a spiral type, and a tubular type. From the viewpoint of suppressing clogging, a hollow fiber type is preferable.

The inner diameter of the hollow fiber type microfiltration membrane is not limited, and may be, for example, 0.1 to 2 mm, and is preferably 0.8 to 1.4 mm.

The length of the hollow fiber type microfiltration membrane is not limited, and may be, for example, 0.05 to 3 m, and is preferably 0.05 to 2 m.

Examples of the material of the microfiltration membrane include cellulose, aromatic polyamide, polyvinyl alcohol, polysulfone, polyether sulfone, polyvinylidene fluoride, polyethylene, polyacrylonitrile, polypropylene, polycarbonate, polytetrafluoroethylene, ceramics, and metal. Among these, aromatic polyamide, polyvinyl alcohol, polysulfone, polyvinylidene fluoride, polyethylene, polyacrylonitrile, polypropylene, polycarbonate, or polytetrafluoroethylene is preferable, and polyacrylonitrile or polyvinylidene fluoride is particularly preferable.

Specific examples of the microfiltration membrane include Cefilt manufactured by NGK Insulators, Ltd.; Microza U Series and Microza P Series manufactured by Asahi Kasei Corporation; Poreflon SPMW, Poreflon OPMW, and Poreflon PM manufactured by Sumitomo Electric Industries, Ltd.; Trayfil manufactured by Toray Industries, Inc.; NADIR MP005 and NADIR MV020 manufactured by Microdyn-Nadir; and X-Flow manufactured by Norit.

From the viewpoint of the removal efficiency of the dimer and the trimer, microfiltration is preferably performed at a pressure of 0.01 MPa or more. The pressure is more preferably 0.03 MPa or more, and still more preferably 0.05 MPa or more. Further, from the viewpoint of pressure resistance, the pressure is preferably 0.5 MPa or less, more preferably 0.25 MPa or less, and still more preferably 0.2 MPa or less.

From the viewpoint of the removal efficiency of the dimer and the trimer, microfiltration is preferably performed at a flow rate of 10 mL/min or more and more preferably performed at a flow rate of 50 mL/min or more, and is preferably performed at a flow rate of 5,000 mL/min or less and more preferably performed at a flow rate of 1,000 mL/min or less.

The dialysis membrane treatment is performed using a dialysis membrane. The dialysis membrane usually has a molecular weight cut-off of 0.05 × 10⁴ to 100 × 10⁴ Da.

The molecular weight cut-off of the dialysis membrane is preferably 0.3 × 10⁴ Da or more because the clogging of the membrane can be suppressed and the dimer and the trimer can be efficiently removed. The molecular weight cut-off is more preferably 0.5 × 10⁴ Da or more, still more preferably 1.0 × 10⁴ Da or more, further preferably 1.5 × 10⁴ Da or more, still further preferably 2.0 × 10⁴ Da or more, particularly preferably 3.0 × 10⁴ Da or more, and most preferably 5.0 × 10⁴ Da or more. The molecular weight cut-off may be 8.0 × 10⁴ Da or more.

Further, from the viewpoint of the removal efficiency of the dimer and the trimer, the molecular weight cut-off is preferably 20 × 10⁴ Da or less, and more preferably 10 × 10⁴ Da or less.

The molecular weight cut-off of the dialysis membrane can be measured by, for example, the same method as ultrafiltration membrane.

The material of the dialysis membrane is not limited, and examples include cellulose, polyacrylonitrile, polymethylmethacrylate, ethylene vinyl alcohol copolymers, polysulfone, polyamide, and polyester polymer alloy.

Specific examples of the dialysis membrane include Spectra/Por(R) Float-A-Lyzer, Tube-A-Lyzer, Dialysis tubing, 6 Dialysis tubing, and 7 Dialysis tubing manufactured by Spectrum Laboratories Inc.

Ultrafiltration, microfiltration, or dialysis membrane treatment is preferably performed at a temperature of 10°C or higher. The temperature is more preferably 15°C or higher, still more preferably 20°C or higher, and particularly preferably 30°C or higher. By adjusting the temperature within the above range, the dimer and the trimer can be more efficiently reduced. The temperature is preferably 90°C or lower, more preferably 80°C or lower, still more preferably 70°C or lower, and particularly preferably 60°C or lower.

Ultrafiltration, microfiltration, or dialysis membrane treatment can be performed while adding water to the composition or adjusting the pH of the composition. Water may be added intermittently to the composition or continuously added to the composition.

The end point of ultrafiltration, microfiltration, or dialysis membrane treatment is suitably determined, and is not limited. Further, in ultrafiltration, microfiltration, or dialysis membrane treatment, in order to improve the durability of the filtration membrane, the membrane may be backwashed once per a filtration time of 1 to 24 hours as a rough guide.

Liquid separation can be carried out by, for example, adding an organic solvent to the composition to separate the composition into two phases, i.e., an aqueous phase and an organic solvent phase, and recovering the aqueous phase.

Reprecipitation can be carried out by, for example, adding the composition to a poor solvent dropwise to precipitate the fluoropolymer, recovering the precipitated fluoropolymer, dissolving the recovered fluoropolymer in a good solvent, adding the resulting solution to a poor solvent dropwise to precipitate the fluoropolymer again, and recovering the precipitated fluoropolymer.

By post-treating the composition containing the fluoropolymer of the monomer (I) by the means described above, a fluoropolymer-containing aqueous solution that is substantially free of the dimer and the trimer, or a fluoropolymer-containing aqueous solution with a reduced content of a fraction having a molecular weight of 3,000 or less, is usually obtained. The fluoropolymer-containing aqueous solution obtained by treating the composition may be used as-is in various applications, and the fluoropolymer separated from the aqueous solution may be used in various applications. The method for separating the fluoropolymer from the aqueous solution is not limited. For example, the fluoropolymer can be separated by a method such as coagulation, washing, or drying of the fluoropolymer in the aqueous solution.

The production method of the present disclosure provides a fluoropolymer or an aqueous solution containing a fluoropolymer and an aqueous medium. The present disclosure relates to a fluoropolymer. In particular, the fluoropolymer in which the content of the polymerization unit (I) is 50 mol% or more based on all polymerization units constituting the fluoropolymer and which has a weight average molecular weight (Mw) of 40 .0 × 10⁴ or more can be suitably used as a fluoropolymer capable of readily forming a uniform coating film having a desired film thickness because it has a high molecular weight despite containing a large amount of the polymerization unit (I).

The fluoropolymer may be a homopolymer consisting of the polymerization unit (I) derived from the monomer (I), or may be a copolymer comprising the polymerization unit (I) and a polymerization unit derived from a further monomer copolymerizable with the monomer (I). The further monomer is as described above. The polymerization unit (I) may be the same or different at each occurrence, and may contain the polymerization unit (I) derived from two or more different monomers represented by the general formula (I).

The content of the polymerization unit (I) in the fluoropolymer is, in order of preference, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, 90 mol% or more, or 99 mol% or more based on all polymerization units constituting the fluoropolymer. The content of the polymerization unit (I) is, particularly preferably, substantially 100 mol%, and the fluoropolymer most preferably consists of the polymerization unit (I). A higher content of the polymerization unit (I) in the fluoropolymer is more advantageous because the water-solubility of the fluoropolymer is increased.

In the fluoropolymer, the content of the polymerization unit derived from the further monomer copolymerizable with the monomer (I) is, in order of preference, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, 10 mol% or less, 1 mol% or less based on all polymerization units constituting the fluoropolymer. The content of the polymerization unit derived from the further monomer copolymerizable with the monomer (I) is, particularly preferably, substantially 0 mol%, and most preferably the fluoropolymer does not contain the polymerization unit derived from the further monomer.

The production method of the present disclosure is capable of producing a fluoropolymer having an extremely high molecular weight. In conventional techniques, introducing a large amount of the polymerization unit (I) into a fluoropolymer fails to produce a fluoropolymer having a high molecular weight. The production method of the present disclosure is capable of producing a high molecular weight fluoropolymer even when a large amount of the polymerization unit (I) is introduced into the fluoropolymer, for example, such that the content of the polymerization unit (I) is 50 mol% or more based on all polymerization units constituting the fluoropolymer.

The lower limit of the weight average molecular weight of the fluoropolymer is 40.0 × 10⁴ or more. The upper limit of the weight average molecular weight of the fluoropolymer is, in order of preference, 150.0 × 10⁴ or less, 100.0 × 10⁴ or less, or 60.0 × 10⁴ or less.

The preferred lower limit of the number average molecular weight of the fluoropolymer is, in order of preference, 8.0 × 10⁴ or more, 10.0 × 10⁴ or more, or 12.0 × 10⁴ or more. The upper limit of the number average molecular weight of the fluoropolymer is, in order of preference, 75.0 × 10⁴ or less, 50.0 × 10⁴ or less, 40.0 × 10⁴ or less, or 30.0 × 10⁴ or less.

The number average molecular weight and the weight average molecular weight are molecular weight values calculated by gel permeation chromatography (GPC) using monodisperse polyethylene oxide (PEO) and polyethylene glycol (PEG) as standards. When measurement by GPC is not possible, the number average molecular weight of the fluoropolymer can be determined by the correlation between the number average molecular weight calculated from the number of terminal groups obtained by NMR, FT-IR, or the like, and the melt flow rate. The melt flow rate can be measured in accordance with JIS K 7210.

The fluoropolymer usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or fluoroalkyl group preferably has 1 to 20 carbon atoms. These terminal groups are, in general, produced from an initiator or a chain transfer agent used to form the fluoropolymer or produced during a chain transfer reaction.

The fluoropolymer preferably has an ion exchange rate (IXR) of 53 or less. The IXR is defined as the number of carbon atoms in the polymer backbone based on the ionic group. A precursor group that becomes ionic by hydrolysis (such as -SO₂F) is not regarded as an ionic group for the purpose of determining the IXR.

The IXR is preferably 0.5 or more, more preferably 1 or more, still more preferably 3 or more, further preferably 4 or more, still further preferably 5 or more, and particularly preferably 8 or more. Further, the IXR is more preferably 43 or less, still more preferably 33 or less, and particularly preferably 23 or less.

The ion exchange capacity of the fluoropolymer is, in order of preference, 0.80 meq/g or more, 1.50 meq/g or more, 1.75 meq/g or more, 2.00 meq/g or more, 2.20 meq/g or more, more than 2.20 meq/g, 2.50 meq/g or more, 2.60 meq/g or more, 3.00 meq/g or more, or 3.50 meq/g or more. The ion exchange capacity is the content of ionic groups (anionic groups) in the fluoropolymer and can be calculated from the formulation of the fluoropolymer.

In the fluoropolymer, the ionic groups (anionic groups) are typically distributed along the polymer backbone. The fluoropolymer contains the polymer backbone together with a repeating side chain bonded to this backbone, and this side chain preferably has an ionic group.

The fluoropolymer preferably contains an ionic group having a pKa of less than 10, and more preferably less than 7. The ionic group of the fluoropolymer is preferably selected from the group consisting of sulfonate, carboxylate, phosphonate, and phosphate.

The terms "sulfonate, carboxylate, phosphonate, and phosphate" are intended to refer to the respective salts, or the respective acids that can form salts. A salt when used is preferably an alkali metal salt or an ammonium salt. A preferable ionic group is a sulfonate group.

The fluoropolymer preferably has water-solubility. Water-solubility means the property of being readily dissolved or dispersed in an aqueous medium. The particle size of a water-soluble fluoropolymer cannot be measured by, for example, dynamic light scattering (DLS). On the other hand, the particle size of a non-water-soluble fluoropolymer can be measured by, for example, dynamic light scattering (DLS).

The aqueous solution containing the fluoropolymer and the aqueous medium can also be used in various applications. The content of the fluoropolymer in the aqueous solution is, based on the aqueous solution, preferably 0.1% by mass or more, more preferably 1.0% by mass or more, still more preferably 1.5% by mass or more, and particularly preferably 2.0% by mass or more, and is preferably 20% by mass or less, and more preferably 15% by mass or less.

The fluoropolymer or the fluoropolymer-containing aqueous solution may be substantially free of the dimer and the trimer of the monomer (I). The dimer and the trimer of the monomer (I) are usually produced when polymerizing the monomer (I) to obtain the fluoropolymer. The content of the dimer and the trimer in the fluoropolymer is 1.0% by mass or less, preferably 0.1% by mass or less, more preferably 0.01% by mass or less, still more preferably 0.001% by mass or less, and particularly preferably 0.0001% by mass or less based on the fluoropolymer.

The content of the dimer and the trimer in the fluoropolymer can be determined by performing a gel permeation chromatography (GPC) analysis on the fluoropolymer and calculating the total proportion of the peak areas (area percentages) of the dimer and the trimer to the total area of all peaks of the chromatogram obtained by the GPC analysis.

Further, when the content of the dimer and the trimer in the fluoropolymer is less than 0.5% by mass based on the fluoropolymer, the content can be determined by liquid chromatography-mass spectrometry (LC/MS) measurement.

Specifically, aqueous solutions having five or more content levels of the monomer (I) are prepared, the LC/MS analysis is performed with respect to each content, the relationship between a content and an area based on that content (the integral value of the peak) is plotted, and a calibration curve of the monomer (I) is created. Moreover, calibration curves of the dimer and the trimer of the monomer (I) are created from the calibration curve of the monomer (I).

Methanol is added to the fluoropolymer to prepare a mixture, and an extract (supernatant) is recovered from the mixture by centrifugation, and the resulting extract is subjected to the LC/MS analysis.

Then, using the calibration curves, the chromatographic area (the integral value of peaks) of the dimer and the trimer of the monomer (I) can be converted to the content of the dimer and the trimer.

The content of the fraction having a molecular weight of 3,000 or less in the fluoropolymer or the fluoropolymer-containing aqueous solution may be 3.7% or less, and is preferably 3.2% or less, still more preferably 2.7% or less, yet still more preferably 1.7% or less, still further preferably 1.2% or less, particularly preferably 1.0% or less, and most preferably 0.6% or less based on to the fluoropolymer. The lower limit of the content of the fraction having a molecular weight of 3,000 or less is not limited, and is, for example, 0.01%.

The content of the fraction having a molecular weight of 3,000 or less can be calculated from the peak area of GPC. The fraction having a molecular weight of 3,000 or less includes all compounds having a molecular weight of 3,000 or less.

The fluoropolymer or the fluoropolymer-containing aqueous solution is, preferably, substantially free of a fluorine-containing surfactant. Herein, the phrase "substantially free of a fluorine-containing surfactant" means that the content of the fluorine-containing surfactant in the fluoropolymer or in the aqueous solution is 10 ppm by mass or less, preferably 1 ppm by mass or less, more preferably 100 mass ppb or less, still more preferably 10 mass ppb or less, further preferably 1 mass ppb or less, and particularly preferably less than the detection limit of measurement by liquid chromatography-mass spectrometry (LC/MS).

The content of the fluorine-containing surfactant can be determined by a known method. For example, it can be quantified by LC/MS analysis.

First, methanol is added to the fluoropolymer or the aqueous solution, extraction is performed, and the resulting extract is subjected to LC/MS analysis. To further increase extraction efficiency, treatment by Soxhlet extraction, or ultrasonic treatment may be performed.

From the resulting LC/MS spectrum, molecular weight information is extracted, and a match with the structural formula of a candidate fluorine-containing surfactant is checked.

Thereafter, aqueous solutions having five or more content levels of the confirmed fluorine-containing surfactant are prepared, and LC/MS analysis of the aqueous solution of each content is performed, and the relationship between the content and the area for the content is plotted, and a calibration curve is drawn.

Then, using the calibration curve, the area of the LC/MS chromatogram of the fluorine-containing surfactant in the extract can be converted to the content of the fluorine-containing surfactant.

The fluoropolymer or the fluoropolymer-containing aqueous solution can be used in various applications. The fluoropolymer or the fluoropolymer-containing aqueous solution can be suitably used, for example, as a component of a coating composition because the fluoropolymer has a high molecular weight.

The coating composition is preferably a composition composed of the fluoropolymer and at least one solvent selected from the group consisting of water and alcohol. The use of such a coating composition enables a coating film exhibiting an excellent antireflection effect to be formed. When the fluoropolymer contained in the coating composition is a fluoropolymer having a sufficiently high molecular weight, such as a fluoropolymer having a weight average molecular weight (Mw) of 40 .0 × 10⁴ or more, a uniform coating film having a desired film thickness can be readily formed, also the antireflection effect and the hydrophilicity of the resulting coating film can be increased, and thus a sufficient developer dissolution rate can be obtained. Also, a higher content of the polymerization unit (I) in the fluoropolymer is preferable because the coating film can be provided with a lower refractive index and better developer solubility.

The solvent contained in the coating composition is at least one selected from the group consisting of water and alcohol. The alcohol is preferably a lower alcohol having 1 to 6 carbon atoms, and more preferably at least one selected from the group consisting of methanol, ethanol, isopropanol, n-propanol, and butyl alcohol.

The coating composition may further contain a water-soluble organic solvent (excluding alcohol), at least one basic substance selected from ammonia and organic amine, a surfactant, acid, a water-soluble polymer, a photoacid generator, an antifoaming agent, a light absorber, a storage stabilizer, a preservative, an adhesion aid, and a dye

The content of the fluoropolymer in the coating composition is preferably 0.1 to 50% by mass, more preferably 0.5 to 30% by mass, still more preferably 1 to 20% by mass, and particularly preferably 2 to 10% by mass based on the coating composition.

A coating film can be produced by applying the coating composition to a substrate. The method for applying the coating composition is not limited, and includes roll coating, casting, dipping, spin coating, water casting, die coating, and Langmuir-Blodgett technique

Examples of the substrate to which the coating composition is applied include silicon wafers and quartz glass.

In particular, when precise control of the film thickness is required, application by spin coating is suitable. When spin coating is used, the film thickness of the coating film is determined by the number of rotations of the substrate, the rotation time, and the viscosity of the coating composition. Due to the characteristics of an apparatus (a spin coater), an excessively low rotational speed or an excessively short rotation time likely results in variations in film thickness, and thus the application is generally performed at a high rotational speed for a certain period of time.

However, when the coating composition is applied at a high rotational speed for a certain amount of time, the resulting film thickness is small. Accordingly, it is not easy to produce a relatively thick film by using spin coating while suppressing variations in film thickness. The coating composition of the present disclosure is capable of imparting excellent effects such as hydrophilicity to the coating film and, at the same time, readily forming a relatively thick film while suppressing variations in film thickness even when the content of the polymerization unit (I) in the fluoropolymer is large because the fluoropolymer has a high molecular weight.

The coating film obtained from the coating composition is suitable as, for example, a pellicle and an antireflection film. For example, applying the coating composition to a photoresist layer enables a photoresist laminate having a photoresist layer and an antireflection film to be prepared.

### EXAMPLES

Next, embodiments of the present disclosure will now be described with reference to Examples, but the present disclosure is not limited only to these Examples.

The numerical values of the Examples were measured by the following methods.

### (Oxygen concentration in reactor)

Gas discharged from the discharge gas line while nitrogen-bubbling the liquid in the reactor was measured and analyzed using a low-concentration oxygen analyzer (trade name "PS-820-L", manufactured by Iijima Electronics Corporation) to thus determine the oxygen concentration during reaction.

### (Concentration of fluoropolymer in aqueous solution (solid concentration))

In a vacuum dryer, about 1 g of an aqueous solution containing a fluoropolymer was dried at 60°C for 60 minutes, the mass of non-volatile matter was measured, and the ratio of the mass of the non-volatile matter to the mass (1 g) of the aqueous solution was expressed in percentage and taken as the fluoropolymer concentration.

### (Method for measuring weight average molecular weight (Mw) and number average molecular weight (Mn))

Mw and Mn of a fluoropolymer were measured by gel permeation chromatography (GPC) using 1260 Infinity II manufactured by Agilent Technologies using columns manufactured by Tosoh Corp. (one TSKgel G3000PW_{XL} and one TSKgel GMPW_{XL} connected in series) while allowing a mixed solvent of a Tris buffer and acetonitrile (Tris buffer : acetonitrile = 8 : 2 (v/v)) as a solvent to flow at a flow rate of 0.5 ml/min, and the molecular weights were calculated using monodisperse polyethylene oxide (PEO) and polyethylene glycol (PEG) as standards.

### (Method for measuring content of dimer and trimer of monomer in fluoropolymer)

### (1) Extraction from aqueous solution

The solid content of an aqueous solution of a fluoropolymer was measured, and the amount of the aqueous solution corresponding to 0.2 g of the solid content of the fluoropolymer was weighed. Thereafter, water and methanol were added such that the volume ratio of water, including water contained in the aqueous solution, to methanol was 50/50 (% by volume) to obtain a mixed solution containing the fluoropolymer, water, and methanol. Thereafter, the resulting mixed solution was centrifuged at 4,000 rpm for 1 hour, and the supernatant containing the fluoropolymer was recovered as an extract.

The extract was analyzed using a liquid chromatograph-mass spectrometer (Waters, LC-MS ACQUITY UPLC/TQD) to obtain a chromatogram of the extract.

The content of a dimer and a trimer of a monomer contained in the extract was obtained by converting the integral values of peaks derived from the dimer and the trimer of the monomer appearing in the chromatogram of the extract into the content of the dimer and the trimer of the monomer using the calibration curve of the analog monomer.

### (2) Calibration curve of monomer

Five concentration levels of a methanol standard solution of a monomer having a known content of 1 ng/mL to 100 ng/mL were prepared, and measurement was made using a liquid chromatograph-mass spectrometer (Waters, LC-MS ACQUITY UPLC/TQD). The relationship between the content of each monomer and the integrated value of a peak corresponding to the content was plotted to prepare a calibration curve (first-order approximation) of each monomer. Next, the calibration curve (first-order approximation) of each monomer was used to prepare calibration curves of the dimer and the trimer of each monomer.

Measuring instrument configuration and LC-MS measurement conditions are below:

### [Table 1]

**Table 1**

| LC unit | | | |
|---|---|---|---|
| | Equipment | Acquity UPLC manufactured by Waters | |
| | Column | Acquity UPLC BEH C18 1.7mm (2.1 × 50 mm) manufactured by Waters | |
| | Mobile phase | A CH₃CN | |
| | | B 20 mM CH₃COONH₄/H₂O | |
| | | 0 → 1.5 min | A:B=10:90 |
| | | 1.5 → 8.5 min | A:B= 10:90 → A:B =90:10 Linear gradient |
| | | 8.5 → 10 min | A:B=90:10 |
| | Flow rate | 0.4 mL/min | |
| | Column temperature | 40°C | |
| | Sample injection amount | 5 µL | |

| MS unit | | | |
|---|---|---|---|
| | Equipment | TQ Detecter | |
| | Measurement mode | MRM (Multiple Reaction Monitoring) | |
| | Ionization method | Electrospray ionization SCAN | |

The quantification limit in this measuring instrument configuration is 1 ng/mL.

### <Example 1>

To a reactor, 7.5 g of perfluoro-(6,6-dihydro-2-trifuoromethyl-3- oxa-5-hexenoic acid) and 17.5 g of water were added, and the liquid in the reactor was stirred for 30 minutes at room temperature while N₂ bubbling. While stirring the mixture at 50°C, ammonium persulfate (APS) was added in an amount corresponding to 0.5 mol% based on the amount of perfluoro-(6,6-dihydro-2-trifluoromethyl-3-oxa-5-hexenoic acid) to initiate the reaction. The reaction was terminated after stirring for 23 hours. The oxygen concentration in the reactor varied between 250 ppm by volume and 350 ppm by volume.

Water was added to the resulting fluoropolymer-containing aqueous solution to adjust the concentration of the fluoropolymer to 2.0% by mass, and then the aqueous solution was brought into contact with an ultrafiltration membrane (a molecular weight cut-off of 50,000 Da, made of polyacrylonitrile) at 25°C at a water pressure of 0.1 MPa to carry out ultrafiltration. While suitably adding water, ultrafiltration was continued until a filtrate of water in an amount 7 times greater than the aqueous solution was eventually eluted, and thus an aqueous solution of the fluoropolymer was obtained. The concentration of the aqueous solution carried out by performing ultrafiltration was 2.1% by mass.

The aqueous solution obtained by carrying out ultrafiltration was analyzed. The resulting fluoropolymer had a weight average molecular weight (Mw) of 40.8 × 10⁴ and a number average molecular weight (Mn) of 10.2 × 10⁴. The content of the dimer and the trimer in the aqueous solution obtained by carrying out ultrafiltration was 0.1% by mass or less based on the fluoropolymer.

### <Example 2>

To the reactor, 1,650 g of perfluoro-(6,6-dihydro-2-trifluoromethyl-3-oxa-5-hexenoic acid) and 3,850 g of water were added, and the liquid in the reactor was stirred for 30 minutes at room temperature while N₂ bubbling. While stirring the mixture at 52°C, ammonium persulfate (APS) was added in an amount corresponding to 0.5 mol% based on the amount of perfluoro-(6,6-dihydro-2-trifluoromethyl-3-oxa-5-hexenoic acid) to initiate the reaction. The reaction was terminated after stirring for 23 hours. The oxygen concentration in the reactor varied between 11 ppm by volume and 20 ppm by volume.

Ultrafiltration was carried out on the resulting fluoropolymer-containing aqueous solution in the same manner as Example 1. The concentration of the aqueous solution obtained by carrying out ultrafiltration was 2.1% by mass.

The aqueous solution obtained by carrying out ultrafiltration was analyzed. The resulting fluoropolymer had a weight average molecular weight (Mw) of 46.0 × 10⁴ and a number average molecular weight (Mn) of 12.2 × 10⁴. The content of the dimer and the trimer in the aqueous solution obtained by carrying out ultrafiltration was 0.1% by mass or less based on to the fluoropolymer.

### <Comparative Example 1>

A fluoropolymer was obtained in the same manner as Example 1 except that the amount of perfluoro-(6,6-dihydro-2-trifluoromethyl-3-oxa-5-hexenoic acid) was changed to 17.5 g, the amount of water was changed to 32.5 g, the temperature was changed to 56°C, and the oxygen concentration in the reactor varied so as to be 9,400 ppm by volume or less.

Ultrafiltration was carried out on the resulting fluoropolymer-containing aqueous solution in the same manner as Example 1. The concentration of the aqueous solution obtained by carrying out ultrafiltration was 2.0% by mass. The aqueous solution obtained by carrying out ultrafiltration was analyzed. The resulting fluoropolymer had a weight average molecular weight (Mw) of 19.6 × 10⁴ and a number average molecular weight (Mn) of 6.2 × 10⁴. The content of the dimer and the trimer in the aqueous solution obtained by carrying out ultrafiltration was 0.1% by mass or less based on the fluoropolymer.

### <Comparative Example 2>

A fluoropolymer was obtained in the same manner as Comparative Example 1 except that the temperature was changed to 80°C.

Ultrafiltration was carried out on the resulting fluoropolymer-containing aqueous solution in the same manner as Example 1. The concentration of the aqueous solution obtained by carrying out ultrafiltration was 2.0% by mass. The aqueous solution obtained by carrying out ultrafiltration was analyzed. The resulting fluoropolymer had a weight average molecular weight (Mw) of 9.6 × 10⁴ and a number average molecular weight (Mn) of 4.3 × 10⁴. The content of the dimer and the trimer in the aqueous solution obtained by carrying out ultrafiltration was 0.1% by mass or less based on the fluoropolymer.

### <Experimental Example 1 (preparation of coating film)>

In order to form a film having a thickness of 1 µm on a substrate, the concentration of the aqueous solution obtained by carrying out ultrafiltration in Example 1 (the weight average molecular weight (Mw) of the fluoropolymer was 40.8 × 10⁴) was adjusted to thereby prepare a polymer solution having a concentration of the fluoropolymer of 2% by mass. After being stirred with a stirrer for 24 hours, the solution was filtered through a disposable syringe filter having a pore size of 0.2 µm to give a spin coating solution.

Using the resulting spin coating solution and a commercially available programmable spin coater, spin coating was performed on a silicon wafer substrate under the following conditions. The spin coating solution was applied on the substrate while rotating the substrate at a rotational speed of 200 rpm for 10 seconds, and then the spin coating solution was applied on the substrate while rotating the substrate at 2,000 rpm for 50 seconds. The film immediately after being formed was dried for 8 hours in a blower-type electric furnace at a temperature of 50°C, and the substrate on which a coating film was formed was removed. The film thickness of the coating film was measured at 5 points with a digital film thickness gauge. The average film thickness of the coating film was 1.03 µm, and it was thus possible to uniformly form a coating film having the intended film thickness.

### <Comparative Experimental Example 1>

A substrate on which a coating film was formed was prepared in the same manner as Experimental Example 1 except that the aqueous solution obtained by carrying out ultrafiltration in Comparative Example 1 (the weight average molecular weight (Mw) of the fluoropolymer was 19.6 × 10⁴) was used. The average film thickness of the resulting coating film was 10.5 µm, and a film having the intended thickness was not obtained.

### <Comparative Experimental Example 2>

A substrate on which a coating film was formed was prepared in the same manner as Comparative Experimental Example 1 except that the concentration of the fluoropolymer of the polymer solution was changed to 10% by mass. The resulting coating film had an average thickness of about 1 µm, but had variations in film thickness.

### <Comparative Experimental Example 3>

A substrate on which a coating film was formed was prepared in the same manner as Comparative Experimental Example 1 except that the rotational speed and the rotational time were changed so that the spin coating solution was applied on the substrate while rotating the substrate at 200 rpm for 60 seconds. The resulting coating film had an average thickness of about 1 µm, but had variations in film thickness.

## Claims

1. A method for producing a fluoropolymer, comprising polymerizing a monomer (I) of formula (I):
CX₂=CY-CF₂-O-Rf-A (I)
wherein
X, Y each independently are H, F, CH₃,or CF₃, and at least one of X and Y is F;
Rf is C₁₋₄₀-fluoroalkylene or C₂₋₁₀₀-fluoroalkylene having an ether bond; and
A is -COOM, -SO₃M, -OSO₃M, or -C(CF₃)₂OM, wherein M is H, a metal atom, NR⁷₄ wherein R⁷ is H or an organic group, or imidazolium, pyridinium or phosphonium each optionally having a substituent;
in an aqueous medium, wherein the oxygen concentration in the reaction system of the polymerization is maintained at ≤ 500 ppm by volume, and the monomer (I) is polymerized at a polymerization temperature of 20-59°C.

2. The method of claim 1, wherein the monomer (I) is polymerized in the presence of a polymerization initiator, and
- the polymerization initiator is a persulfate, and/or
- the total amount of the polymerization initiator added for use in the polymerization is 0.00001-10 mass% based on the aqueous medium.

3. The method of any of claim 1 or 2, wherein the total amount of monomer of the monomer (I) and an optional monomer other than the monomer (I) present in a reactor at the beginning of polymerization is ≥ 40 mass% based on an amount of the aqueous medium present.

4. The method of any of claims 1-3, wherein the content of polymerization units (I) derived from the monomer (I) in the fluoropolymer is ≥ 50 mol%, and preferably ≥ 99 mol%, based on all polymerization units constituting the fluoropolymer.

5. The method of any of claims 1-4, wherein the fluoropolymer has a weight average molecular weight (Mw) of ≥ 40.0 × 10⁴, measured by a method disclosed in the description.

6. The method of any of claims 1-5, wherein the fluoropolymer has a number average molecular weight (Mn) of ≥ 8.0 × 10⁴, measured by a method disclosed in the description.

7. The method of any of claims 1-6, wherein an aqueous solution comprising the fluoropolymer is produced.

8. The method of any of claims 1-7, wherein a composition comprising the aqueous medium and the fluoropolymer is recovered after polymerization is complete, and the composition is treated by at least one means selected from ultrafiltration, microfiltration, dialysis membrane treatment, liquid separation, and reprecipitation.

9. A fluoropolymer of a monomer (I) of formula (I):
CX₂=CY-CF₂-O-Rf-A (I)
wherein
X, Y each independently are H, F, CH₃,or CF₃, and at least one of X and Y is F;
Rf is C₁₋₄₀-fluoroalkylene or C₂₋₁₀₀-fluoroalkylene having an ether bond; and
A is -COOM, -SO₃M, -OSO₃M, or -C(CF₃)₂OM, wherein M is H, a metal atom, NR⁷₄ wherein R⁷ is H or an organic group, or imidazolium, pyridinium or phosphonium each optionally having a substituent;
wherein the content of polymerization units (I) derived from the monomer (I) is ≥ 50 mol% based on all polymerization units constituting the fluoropolymer, and the fluoropolymer has a weight average molecular weight (Mw) of ≥ 40.0 × 10⁴, measured by a method disclosed in the description.

10. The fluoropolymer of claim 9, having a number average molecular weight (Mn) of ≥ 8.0 × 10⁴, measured by a method disclosed in the description.

11. The fluoropolymer of claim 9 or 10, wherein the content of the polymerization unit (I) is ≥ 99 mol% based on all polymerization units constituting the fluoropolymer.

12. The fluoropolymer of any of claims 9-11, wherein the content of dimers and trimers of the monomer (I) is ≤ 1.0% by mass, measured by a method disclosed in the description.

13. An aqueous solution comprising the fluoropolymer of any of claims 9-12, preferably in an amount of ≥ 2 mass% based on the aqueous solution.

14. A coating composition comprising the fluoropolymer of any of claims 9-12 or the aqueous solution of claim 13.

## Patentansprüche

1. Verfahren zur Herstellung eines Fluorpolymers, umfassend das Polymerisieren eines Monomers (I) der Formel (I):
CX₂=CY-CF₂-O-Rf-A (I)
wobei
X, Y jeweils unabhängig voneinander H, F, CH₃ oder CF₃ sind, und mindestens eines von X und Y F ist;
Rf C₁₋₄₀-Fluoralkylen oder C₂₋₁₀₀-Fluoralkylen mit einer Etherbindung ist; und
A ist -COOM, -SO₃M, -OSO₃M oder -C(CF₃)₂OM, wobei M ist H, ein Metallatom, NR⁷₄ wobei R⁷ ist H oder eine organische Gruppe, oder Imidazolium, Pyridinium oder Phosphonium die jeweils gegebenenfalls einen Substituenten aufweisen;
in einem wässrigen Medium, wobei die Sauerstoffkonzentration im Reaktionssystem der Polymerisation bei ≤ 500 ppm Volumen gehalten wird, und das Monomer (I) bei einer Polymerisationstemperatur von 20-59 °C polymerisiert wird.

2. Verfahren gemäß Anspruch 1, wobei das Monomer (I) in Gegenwart eines Polymerisationsinitiators polymerisiert wird und
- der Polymerisationsinitiator ein Persulfat ist und/oder
- die Gesamtmenge des zur Verwendung in der Polymerisation zugesetzten Polymerisationsinitiators 0,00001 bis 10 Massenprozent, bezogen auf das wässrige Medium, beträgt.

3. Verfahren gemäß mindestens einem der Ansprüche 1 oder 2, wobei die Gesamtmenge an Monomer des Monomers (I) und eines optionalen Monomers mit Ausnahme des zu Beginn der Polymerisation in einem Reaktor vorhandenen Monomers (I) ≥ 40 Massenprozent, bezogen auf die Menge des vorhandenen wässrigen Mediums, beträgt.

4. Verfahren gemäß mindestens einem der Ansprüche 1 bis 3, wobei der Gehalt an Polymerisationseinheiten (I), die aus dem Monomer (I) in dem Fluorpolymer stammen, ≥ 50 Mol-% und vorzugsweise ≥ 99 Mol-% beträgt, bezogen auf alle Polymerisationseinheiten, aus denen das Fluorpolymer besteht.

5. Verfahren gemäß mindestens einem der Ansprüche 1 bis 4, wobei das Fluorpolymer ein gewichtsmittleres Molekulargewicht (Mw) von ≥ 40,0 × 10⁴ aufweist, gemessen nach einem in der Beschreibung offenbarten Verfahren.

6. Verfahren gemäß mindestens einem der Ansprüche 1 bis 5, wobei das Fluorpolymer ein zahlenmittleres Molekulargewicht (Mn) von ≥ 8,0 × 10⁴ aufweist, gemessen nach einem in der Beschreibung offenbarten Verfahren.

7. Verfahren gemäß mindestens einem der Ansprüche 1 bis 6, wobei eine wässrige Lösung hergestellt wird, die das Fluorpolymer umfasst.

8. Verfahren gemäß mindestens einem der Ansprüche 1 bis 7, wobei eine Zusammensetzung umfassend das wässrige Medium und das Fluorpolymer, nach Abschluss der Polymerisation zurückgewonnen wird, und die Zusammensetzung durch mindestens ein Verfahren behandelt wird, ausgewählt aus Ultrafiltration, Mikrofiltration, Dialysemembranbehandlung, Flüssigkeitstrennung und Umfällung (reprecipitation).

9. Fluorpolymer eines Monomers (I) der Formel (I):
CX₂=CY-CF₂-O-Rf-A (I)
wobei
X, Y jeweils unabhängig voneinander H, F, CH₃ oder CF₃ sind, und mindestens eines von X und Y F ist;
Rf C₁₋₄₀-Fluoralkylen oder C₂₋₁₀₀-Fluoralkylen mit einer Etherbindung ist; und
A ist -COOM, -SO₃M, -OSO₃M oder -C(CF₃)₂OM, wobei M ist H, ein Metallatom, NR⁷₄ wobei R⁷ ist H oder eine organische Gruppe, oder Imidazolium, Pyridinium oder Phosphonium die jeweils gegebenenfalls einen Substituenten aufweisen;
wobei der Gehalt an Polymerisationseinheiten (I), die von dem Monomer (I) abgeleitet sind, ≥ 50 Mol-% bezogen auf alle Polymerisationseinheiten, aus denen das Fluorpolymer besteht, beträgt, und das Fluorpolymer ein gewichtsmittleres Molekulargewicht (Mw) von ≥ 40,0 × 10⁴ aufweist, gemessen nach einem in der Beschreibung offenbarten Verfahren.

10. Fluorpolymer gemäß Anspruch 9, mit einem zahlenmittleren Molekulargewicht (Mn) von ≥ 8,0 × 10⁴, gemessen nach einem in der Beschreibung offenbarten Verfahren.

11. Fluorpolymer gemäß Anspruch 9 oder 10, wobei der Gehalt an Polymerisationseinheiten (I) ≥ 99 Mol-%, bezogen auf alle Polymerisationseinheiten, aus denen das Fluorpolymer besteht, beträgt.

12. Fluorpolymer gemäß mindestens einem der Ansprüche 9 bis 11, wobei der Gehalt an Dimeren und Trimeren des Monomers (I) ≤ 1,0 Massenprozent beträgt, gemessen nach einem in der Beschreibung offenbarten Verfahren.

13. Wässrige Lösung umfassend das Fluorpolymer gemäß mindestens einem der Ansprüche 9 bis 12, vorzugsweise in einer Menge von ≥ 2 Massenprozent, bezogen auf die wässrige Lösung.

14. Beschichtungszusammensetzung umfassend das Fluorpolymer gemäß mindestens einem der Ansprüche 9 bis 12 oder die wässrige Lösung gemäß Anspruch 13.

## Revendications

1. Procédé de production d'un polymère fluoré, comprenant la polymérisation d'un monomère (I) de formule (1) :
CX₂=CY-CF₂-O-Rf-A (I)
dans lequel
X, Y sont chacun indépendamment H, F, CH₃ ou CF₃, et au moins l'un de X et Y est F ;
Rf est du C₁₋₄₀-fluoroalkylène ou du C₂₋₁₀₀-fluoroalkylène présentant une liaison éther ; et
A est -COOM, -SO₃M -OSO₃M ou -C(CF₃)₂OM, dans lequel M est H, un atome de métal, NR⁷₄ dans lequel R⁷ est H ou un groupe organique, ou un imidazolium, un pyridinium ou un phosphonium présentant chacun facultativement un substituant ;
dans un milieu aqueux, dans lequel la concentration en oxygène dans le système réactionnel de la polymérisation est maintenue à ≤ 500 ppm en volume, et le monomère (I) est polymérisé à une température de polymérisation de 20-59 °C.

2. Procédé selon la revendication 1, dans lequel le monomère (I) est polymérisé en présence d'un initiateur de polymérisation, et
- l'initiateur de polymérisation est un persulfate, et/ou
- la quantité totale de l'initiateur de polymérisation ajoutée pour être utilisée dans la polymérisation est de 0,00001-10 % en masse sur la base du milieu aqueux.

3. Procédé selon l'une quelconque de la revendication 1 ou de la revendication 2, dans lequel la quantité totale de monomère du monomère (I) et un monomère facultatif autre que le monomère (I) présent dans un réacteur au début de la polymérisation est ≥ 40 % en masse sur la base d'une quantité du milieu aqueux présent.

4. Procédé selon l'une quelconque des revendications 1 à 3, dans lequel le contenu des unités (I) de polymérisation dérivées du monomère (I) dans le polymère fluoré est ≥ 50 % en moles, et de préférence ≥ 99 % en moles, sur la base de toutes les unités de polymérisation constituant le polymère fluoré.

5. Procédé selon l'une quelconque des revendications 1 à 4, dans lequel le polymère fluoré présente un poids moléculaire moyen en poids (Mw) ≥ 40,0 × 10⁴, mesuré par un procédé divulgué dans la description.

6. Procédé selon l'une quelconque des revendications 1 à 5, dans lequel le polymère fluoré présente un poids moléculaire moyen en nombre (Mn) ≥ 8,0 × 10⁴, mesuré par un procédé divulgué dans la description.

7. Procédé selon l'une quelconque des revendications 1 à 6, dans lequel une solution aqueuse comprenant le polymère fluoré est produite.

8. Procédé selon l'une quelconque des revendications 1 à 7, dans lequel une composition comprenant le milieu aqueux et le polymère fluoré est récupérée une fois la polymérisation terminée, et la composition est traitée par au moins un moyen sélectionné parmi l'ultrafiltration, la microfiltration, le traitement par membrane de dialyse, la séparation liquide et la reprécipitation.

9. Polymère fluoré d'un monomère (I) de formule (1) :
CX₂=CY-CF₂-O-Rf-A (I)
dans lequel
X, Y sont chacun indépendamment H, F, CH₃ ou CF₃, et au moins l'un de X et Y est F ;
Rf est du C₁₋₄₀-fluoroalkylène ou du C₂₋₁₀₀-fluoroalkylène présentant une liaison éther ; et
A est -COOM, -SO₃M, -OSO₃M, ou -C(CF₃)₂CM, dans lequel M est H, un atome de métal, NR⁷₄ dans lequel R⁷ est H ou un groupe organique, ou un imidazolium, un pyridinium ou un phosphonium présentant chacun facultativement un substituant ;
dans lequel le contenu des unités (I) de polymérisation dérivées du monomère (I) est ≥ 50 % en moles sur la base de toutes les unités de polymérisation constituant le polymère fluoré, et le polymère fluoré présente un poids moléculaire moyen en poids (Mw) ≥ 40,0 × 10⁴, mesuré par un procédé divulgué dans la description.

10. Polymère fluoré selon la revendication 9, présentant un poids moléculaire moyen en nombre (Mn) ≥ 8,0 × 10⁴, mesuré par un procédé divulgué dans la description.

11. Polymère fluoré selon la revendication 9 ou la revendication 10, dans lequel le contenu de l'unité (I) de polymérisation est ≥ 99 % en moles sur la base de toutes les unités de polymérisation constituant le polymère fluoré.

12. Polymère fluoré selon l'une quelconque des revendications 9 à 11, dans lequel la teneur en dimères et trimères du monomère (I) est ≤ 1,0 % en masse, mesuré par un procédé divulgué dans la description.

13. Solution aqueuse comprenant le polymère fluoré selon l'une quelconque des revendications 9 à 12, de préférence en une quantité ≥ 2 % en masse sur la base de la solution aqueuse.

14. Composition de revêtement comprenant le polymère fluoré selon l'une quelconque des revendications 9 à 12 ou la solution aqueuse selon la revendication 13.
